Europäisches Patentamt

(19) European Patent Office

Office européen des brevets

(11) Publication number: **0 016 499**
**A1**

# (12) EUROPEAN PATENT APPLICATION

(21) Application number: **80200232.9**

(22) Date of filing: **11.03.80**

(51) Int. Cl.³: **A 01 C 23/02**

(30) Priority: **14.03.79 ZA 791201**

(43) Date of publication of application:
**01.10.80 Bulletin 80/20**

(84) Designated Contracting States:
**AT BE CH DE FR GB IT LU NL SE**

(71) Applicant: STELLENBOSCH FARMERS' SERVICES
(PROPRIETARY) LIMITED
Oude Libertas
Stellenbosch Cape Province(ZA)

(72) Inventor: Raubenheimer, Gustav Hogkins
54 Jonkershoek Road
Stennenbosch Cape Province(ZA)

(74) Representative: Houghton, David et al,
Hulse & Co. Cavendish Buildings West Street
Sheffield, S1 1ZZ(GB)

(54) Agricultural apparatus and agricultural methods.

(57) Apparatus for distributing a chemical substance in agricultural land at below surface level, say, 1 metre below. The apparatus includes a hopper (10,114) for the substance, a blower (16,146) for feeding material from the outlet of the hopper into a down-pipe (48,144), and an agitator (88,132) for preventing packing in the hopper. A shank (26) has an earth-working implement (30) at the lower end thereof for lifting the ground and breaking-up subsoil clods but not turning the soil over. The implement has an aperture (40) in it rearwardly of the shank (26), and the downpipe leads to this aperture so that said substance is discharged under pressure below said implement, the pipe lying rearwardly of the shank. Under the hole there is a plate (42) on which down-flowing substance impinges and which scatters it laterally. The substance can flow from the hopper into the blower and then out of the blower outlet into the downpipe. Alternatively, the substance can flow into the upper part of the downpipe and air can be blown into the downpipe so as to suck the chemical substance from the upper part of the downpipe into the lower part, and then discharge it under pressure below the implement.

EP 0 016 499 A1

./...

FIG. 1

FIG. 7

THIS INVENTION relates to agricultural apparatus for treating the subsoil.

Applicants are aware of many forms of agricultural apparatus which have been proposed to enable treatment of the subsoil to be undertaken. Such treatment involves the application of a chemical substance such as a fertilizer, a herbicide or a fungicide to the subsoil. Many proposals have been made involving the application of ammonia in liquid, solid and gaseous form to the subsoil.

All forms of apparatus of which Applicants are aware are intended to apply the substance in a band which is up to 25 cm below the surface of the ground. In such forms of apparatus a major consideration is often the avoidance of wastage. If the substance is simply applied to the surface of the soil then it is clear that only a proportion of this will eventually be leached down to the zone at which the roots are seeking nourishment.

-3-

Many forms of known apparatus place the substance in the soil in the form of a thin strip running rearwardly from the applying tool. Some efforts have been made to increase the width and the depth of the zone which is being treated by a single applicator but, usually, a wide band of treated soil can only be achieved by the use of a number of closely spaced side-by-side applicators which produce a series of bands of treated soil. Where each applicator is at the lower end of an individual shank, this causes considerable mixing of the soil down to the depth of application. If the layer of top soil is relatively thick, then this is not necessarily detrimental. However, if there is only a relatively thin surface layer of top soil then mixing is disadvantageous in that it mixes the top soil with the subsoil and tends to bring the poorer subsoil to the surface.

Applicants have become aware that plant growth can be inhibited if there is an obstruction which prevents the plant roots penetrating deeply into the ground. This is particularly true of vines and fruit trees where the presence of one or more compacted layers of subsoil at depths of between 10 and 100 cm below surface level can have an adverse effect on the growth of the vines or fruit trees. None of the forms of apparatus of which Applicants are aware are capable of treating a soil formation which includes one or more relatively deeply lying compacted layers of subsoil.

It is an object of the present invention to provide apparatus which enables deep treatment of the subsoil to be undertaken with simultaneous breaking-up of compacted layers and the application of a chemical substance.

According to the present invention there is provided agricultural apparatus which includes a shank having means for mounting it on a tractive vehicle and having an earthworking implement at the lower end thereof, there being a pipe extending downwardly adjacent the shank, the earthworking implement comprising a wing mould board on each side of the shank, the wing mould boards sloping upwardly in the rearward direction and said pipe having its lower end opening into the zone below said implement and its upper end connected to means for forcing a chemical substance down the pipe and into said zone, there being soil breakers at the rear of the implement, the soil breakers extending rearwardly from the trailing edge of the remainder of the implement and protruding above said trailing edge.

In a preferred form of the apparatus said wing mould boards extend rearwardly of the shank and there is a plate joining said mould boards behind the shank, there being an aperture in said plate, said pipe leading down to said aperture and there being below said aperture a distributor plate which material flowing down said pipe strikes and is distributed laterally. Said distributor plate preferably includes an element in the form of an upwardly convergent vee the apex of which lies below said aperture.

In one constructional form of the apparatus the chemical substance is contained in a hopper and the outlet from the hopper communicates with the interior of the housing of a blower, the outlet of the blower communicating with said pipe. In another form of the apparatus, a hopper is provided and is arranged so that said substance flows from the hopper under gravity into the upper end of the pipe, there being a blower for forcing air into said pipe at an intermediate point thereof in such manner that it draws downwardly the substance which is in the part of the pipe above the air entry point and forces said substance under pressure into the subsoil.

To prevent packing and bridging of the chemical substance at the outlet from the hopper, an agitator can be provided, and the agitator is preferably driven by a fluid motor. The blower is also preferably driven by a fluid motor.

To enable the operator to exercise control over the rate of application of said substance to the land, mechanically operable means can be provided for enabling the rate of flow of said substance through the hopper outlet to be varied.

To minimise the amount of effort required to drag the implement through the soil, a ripper tip can be provided which extends forwardly from the lower end of the shank and lies ahead of said wings.

In one form of the agricultural apparatus said means is a pump, there being a tank for receiving a liquid and the suction inlet of the pump being connected to said tank, said pipe communicating with a spray bar which is in said zone.

For a better understanding of the present invention, and to show how the same may be carried into effect, reference will now be made, by way of example, to the accompanying drawings in which,

Figure 1 is a rear view of one form of agricultural apparatus according to the invention,

Figure 2 is a side elevation of the apparatus of Figure 1,

Figure 3 is a detail of an earthworking implement,

Figure 4 is a vertical section showing a drive mechanism,

Figure 5 is a detail of a hopper,

Figure 6 is a rear view of a further form of agricultural apparatus according to the invention,

Figure 7 is a vertical section through the apparatus of Figure 6,

Figure 8 is a detail of a distributor plate,

Figure 9 is a diagrammatic vertical section through another form of apparatus, and

Figure 10 is a plan view of the subsoil plough of the apparatus of Figure 9.

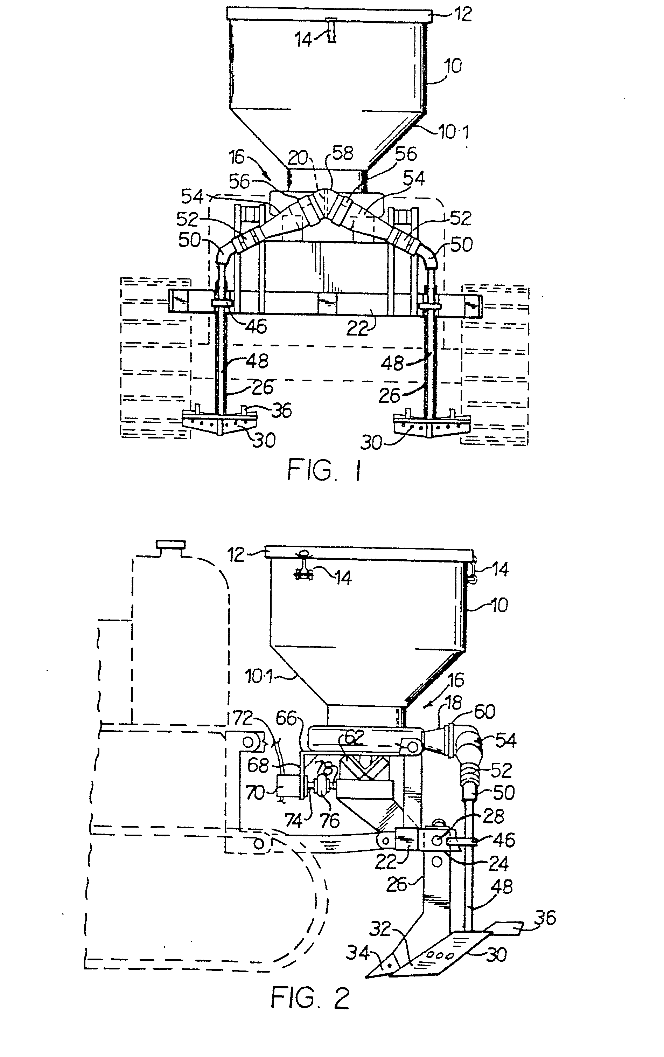

Referring firstly to Figures 1 to 5, the agricultural apparatus illustrated comprises a hopper 10 having a lid 12 held in place by releasable toggle mechanisms 14. The outlet of the hopper is at the lower end of the conical portion 10.1, the hopper outlet communicating with a blower 16. The housing of the blower 16 is in the form of a volute and the outlet from the blower housing is constituted by a horizontal pipe 18 which is divided into left and right hand ports by means of a vertical partition 20.

The structure thus far described is mounted, as will be explained in more detail hereinafter, above the transverse tool bar 22 of, for example, a crawler tractor. A number of U-shaped elements 24 are welded to the rear face of the tool bar 22 to form vertically extending pockets. Two laterally spaced shanks 26 extend downwardly through the pockets, there being pins 28 which pass through apertures in the shanks 26 and in the elements 24 to limit vertical movement of the shanks 26 in their pockets. The shanks 26 have raised and lowered positions and, in Figure 1, are shown in their lowered positions. Once lifted to their raised positions they are retained by inserting the pins in the lowermost apertures provided in the shanks 26.

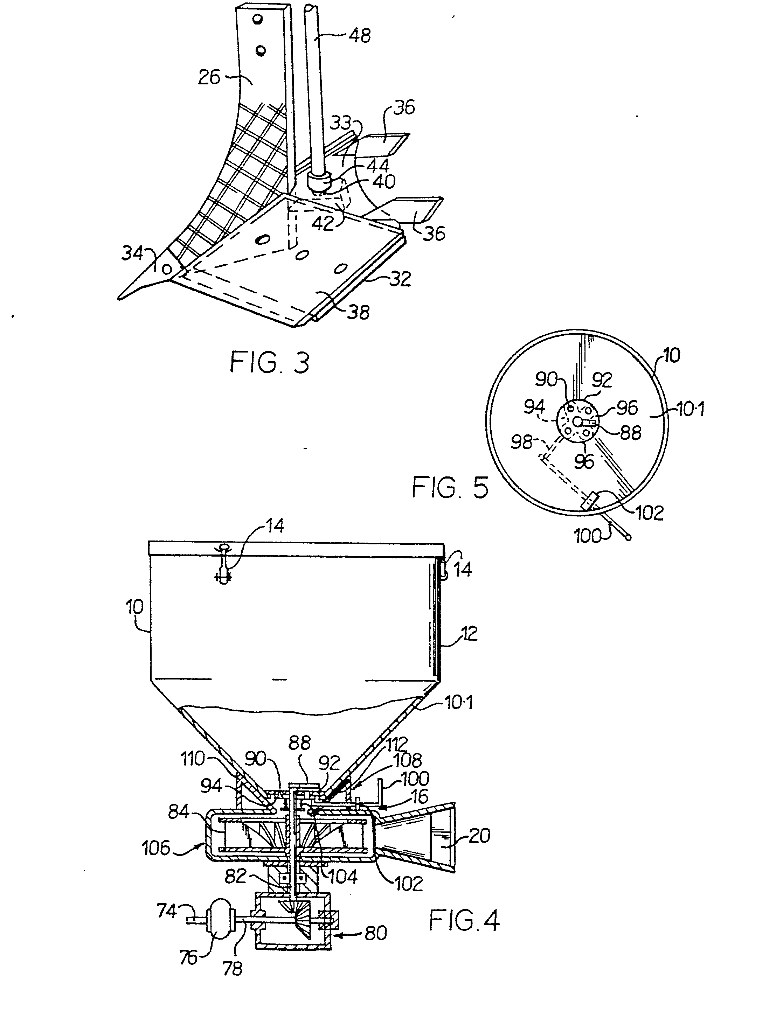

At the lower end of each shank 26 there is an earthworking implement in the form of a sub-soil plough generally designated 30. Each plough 30 (Figure 3) two wing mouldboards 32, the mouldboards 32 being welded to the shank 26, one on each side thereof. A ripper tip 34 extends forwardly from the lower end of the shank 26 and is bolted or otherwise secured thereto. The forward end of the tip 34 is below the leading edges of the mouldboards 32.

0016499

Soil breakers 36 extend rearwardly from a horizontal bracing plate 33 (see particularly Figure 3) which is welded to the mouldboards 32 and to the shank 26. The upper surface of each mouldboard 32 is protected by wear plates 38. There is an aperture 40 in the plate 33 and below the aperture 40 there is a distributor plate 42 which plate is of angled form. The leading edge of the generally horizontal portion of the plate 42 is welded to the rear of the shank 26 forwardly of the aperture 40 and the upper edge of the generally vertical portion thereof is welded to the underside of the plate 33 rearwardly of the aperture 40.

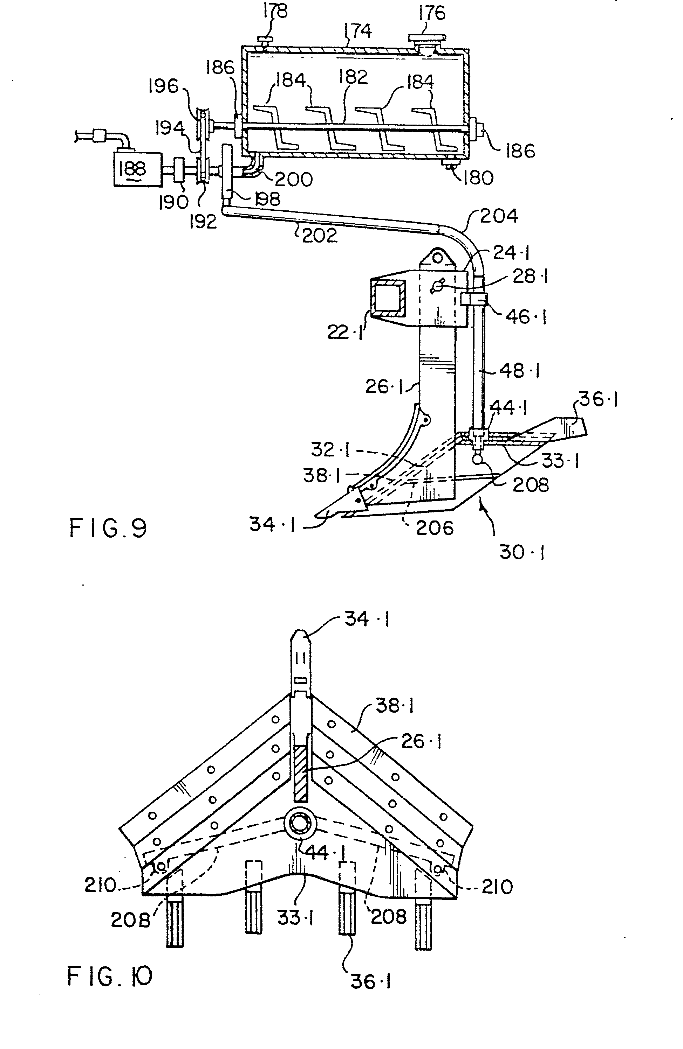

A socket 44 is welded to the top face of the plate 33 (see Figures 3 and 8) co-axial with the aperture 40.

A U-shaped pipe retaining bracket 46 is welded to the rear of each element 24 and pipes 48 extend downwardly through the brackets 46. The lower ends of the pipes 48 seat in the sockets 44 of the two ploughs 30 so that the interiors of the pipes 48 communicate with the apertures 40.

Bends 50 are connected to the upper ends of the pipe 48 and these bends are connected via short flexible hoses 52 to open ended cones 54. The cones 54 are in turn connected via flexible pipe couplings 56 to a shroud 58. A clamping ring 60 connects the shroud 58 to the pipe 18 and there is, within the shroud 58, a vertical partition which is aligned with the partition 20 of the pipe 18.

The housing of the blower 16 is attached by way of two laterally spaced resilient mountings 62 to two supports 64 which themselves extend upwardly from the tool bar 22 (see particularly Figure 2 in which this structure is diagrammatically shown for the sake of simplicity). The mountings 62 inhibit lateral movement of the blower 16 and hopper 10 (that is, movement from left to right in Figure 1) and there are further resilient mountings (not shown) to inhibit front and rear movement.

A horizontal plate 66 extends forwardly from beneath the blower 16 and a mounting bracket 68 extends downwardly from the forward end of the plate 66. An hydraulic motor 70 is mounted on the forward face of the bracket 68, the hydraulic hoses of the motor 70 being shown at 72 and being connected to the hydraulic system of the tractor. A drive shaft 74 extends rearwardly from the motor 70 to a flexible coupling 76. The horizontal output shaft 78 of the coupling 76 is connected to a gearbox 80 (see particularly Figure 4) which lies co-axially with the vertical axis of the hopper 10 and blower 16. The output shaft 82 of the gearbox 80 extends upwardly through the bottom wall of the housing of the blower 16 as best shown in Figure 4. The housing of the blower 16 contains a centrifugal rotor 84 which is mounted on the shaft 82. The air inlet to the housing of the blower 16 is on the right hand side thereof as viewed in Figure 1. The shaft 82 continues upwardly above the rotor 84 and into the lower part of the hopper 10. On the portion of the shaft 82 which is within the hopper there is a radially extending agitator 88 which loosens the material in the hopper and prevents packing and bridging.

Flow of material from the hopper 10 is through four holes 90 of a plate 92 secured in a bottom aperture of the hopper 10. Below the plate 92 there is a disc 94 having four outwardly projecting ears 96. An arm 98 extends from the disc 94 and an operating rod 100 is connected to the outer end of the arm 98, the rod 100 being guided in brackets 102 (see Figures 4 and 5) mounted on the housing of the blower 16. By pulling or pushing on the rod 100, the disc 94 can be turned about the axis of the shaft 82. This varies the area of each hole 90 which is obstructed by the related ear 96 and hence varies the flow rate of the chemical substance.

The disc 94 is spring loaded against the underside of the plate 92 by means of a coil spring 104 so that it is frictionally retained against rotation unless urged to rotate by the rod 100.

As will clearly be seen from Figure 4, the housing of the blower 16 includes a lower portion 106 and an extension 108 which is above the lower portion 106. The portion 106 is actually in the form of a volute and receives the rotor 84. The upward extension 108 is cylindrical in form and includes an outer skirt 110 and an inner cone 112. The hopper 10 rests within the cone 112.

The hydraulically operated variable or fixed angle parallelogram type ripper mounting linkage which secures the structure described to the crawler tractor has not been shown in detail. Such linkages are conventional in earth moving and heavy agricultural apparatus of the crawler type.

In use, the shanks 26 are lowered by means of said linkage so that the ripper tips 34 and ploughs 30 penetrate the ground, the usual depth of penetration being between 60 cm and 1 metre depending on soil structure. The disc 94 is positioned so as to allow the chemical substance, usually lime, to flow at the requisite rate from the hopper 10 into the centre of the extension 108 from which it falls into the rotor 84. The rotor 84 forces the lime into the pipe 18 where flow of air and lime is divided by the partition 20 between the left and right hand ports.

Air and lime flows into the cones 54, which act as reducers and increase the rate of air flow, and thence to the pipes 48.

The ripper tips 34 break the ground and the mouldboards 32 lift the ground through which the apparatus is passing to form cavities therebeneath but do not turn the soil over or unduly disturb the topsoil. The lime emerging from the apertures 40 strikes the plates 42 and is dispersed throughout the cavities under the mouldboards 32.

As clods of earth pass over the mouldboards they are broken up by the breakers 36 and drop through the gaps between the breakers. The lime is dispersed through the now broken earth under pressure from the blower. Experimental work has shown that the lime is distributed along two bands each of which, horizontally, is wider than the plough 30 and which also has a significant vertical extent. Little material is blown out of the soil and lost.

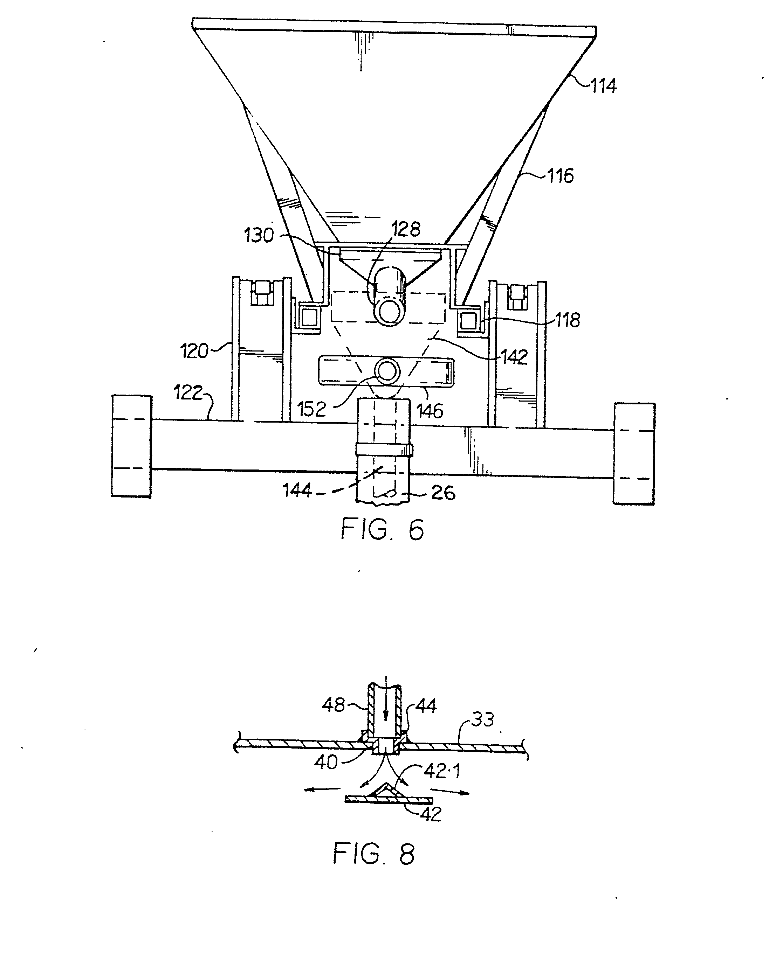

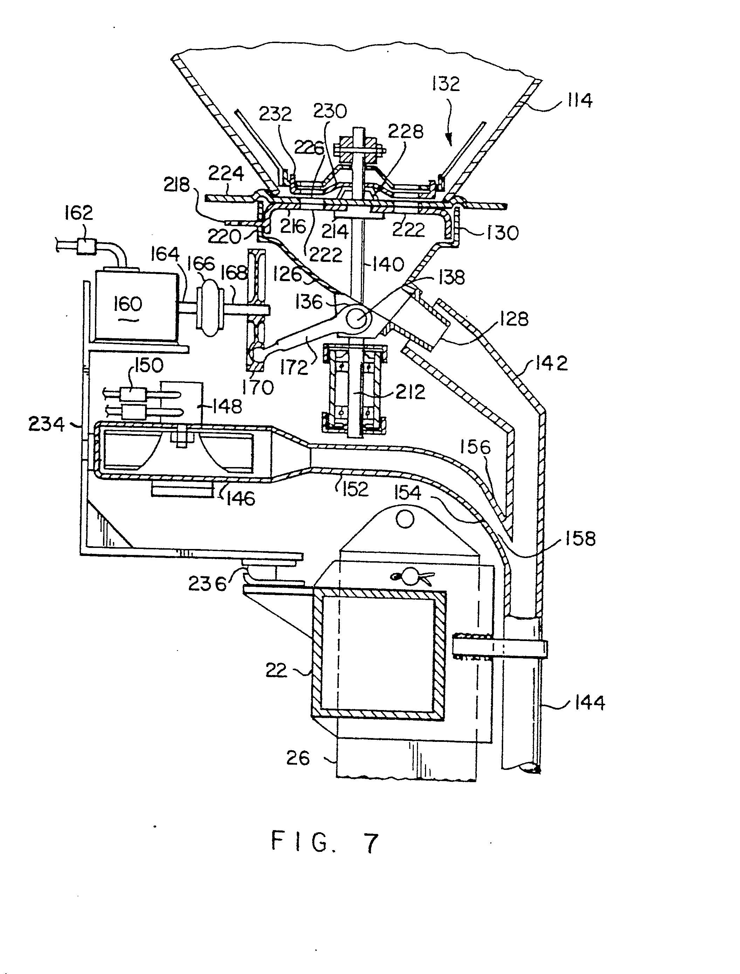

Turning now to Figures 6 and 7, a further form of apparatus according to the invention is illustrated. In this form of the apparatus a hopper 114 is supported by columns 116 on resilient mountings 118. These mountings are themselves supported on structures 120 which rise upwardly from a tool bar 122 of the crawler tractor. The mounting arrangement of the apparatus will not be described in more detail, it being understood that this must conform to the construction of the rear end of the tractive vehicle upon which it is mounted.

The hopper 114 has bottom opening 124 through which material can flow into a chute 126. The chute 126 includes a downwardly sloping pipe 128 and a portion 130 which is of generally cylindrical form. The portion 130 is co-axial with the opening 124 of the hopper 114 and there is an agitator 132.

The pipe 128 leads into a further chute 142 which in turn merges with a downwardly extending pipe 144. The pipe 144 is equivalent to the pipes 48 of Figures 1 to 5 and leads downwardly to an earthworking implement in the form of a sub-soil plough. The plough is of the type described above and designated 30. In the embodiment of Figures 6 and 7 the plough will be of heavier construction as the form of apparatus of Figures 6 and 7 is intended to be mounted on a crawler tractor of substantially greater power than is the apparatus of Figures 1 to 5.

A blower is shown at 146 and an hydraulic motor is shown at 148. Hoses leading to the motor 148 are shown at 150. The rotor of the blower 146 can be of the same type as described above. The outlet from the blower leads into a horizontal pipe 152 which has a downwardly extending neck 154 at the outer end thereof. The neck 154 converges with the pipe 144. At the convergence between the neck 154 and the pipe 144 there is a flat sloping plate 156 which creates, between itself and the wall of the neck 154, a venturi 158. Air flowing from the neck 154 and then down the lower part of the pipe 144 creates a low pressure area which draws the chemical substance from the upper portion of the pipe 144, and downwardly for discharg below the subsoil plough.

A further hydraulic motor is shown at 160. Hydraulic hoses for the motor 160 are shown at 162 and the output shaft of the motor 160 is shown at 164. A flexible coupling 166 is provided between the shaft 164 and a further shaft 168 on which there is a disc 170. One end of an arm 172 is attached by way of a ball joint to the disc 170 near its periphery. The arm extends upwardly to the chute 126 and there is a fork 136 at the upper end of the arm. The limbs of the fork 136 lie side-by-side and each has an aperture therein. A horizontal shaft 138 is rotatably received in these apertures and this shaft is fast with a vertical shaft 140 fast in rotation with the chute 126. The agitator 132 is also fast in rotation with the shaft 140. When the disc 170 rotates, the lower end of the arm 172 travels with it and the vertical component of the motion of the arm 172 is taken up by oscillation of the fork 136 on the horizontal shaft 138. The horizontal component of the motion of the arm 172 causes the chute 126 to oscillate from side to side. This results in rotary oscillations of the agitator 132 thereby to prevent packing and bridging of the chemical substance in the hopper 114. The width of the secondary chute 142 is such that the pipe 128 has freedom to perform its oscillatory motion without striking either side of the chute 142.

The lower end of the shaft 140 is rotatably carried by a bearing 212, the mounting means of which have not been shown. Near the upper end of the shaft 140 there is a bush 214 which supports a disc 216. An arm 218 extends from the disc 216 through a slot 220 in the portion 130. The disc 216 has apertures 222 therein and a fixed plate 224 has corresponding apertures 226 therein. The disc 216 can be rotated to vary the degree of registration between the apertures 222 and 226 thereby to control the flow rate from the hopper 114.

An inverted cup 228 of resilient plastics material seals around the shaft 140 and a drive member 230 is fast in rotation with the hexagonal top portion of the shaft 140. The drive member 230 has upwardly directed fingers 232 which engage and drive the agitator 132.

The blower 146 and the motor 160 are mounted on a bracket 234 which is in turn connected by way of a resilient mounting 236 to the bar 22.

The plate 42 can, if desired, have the form shown in Figure 8. In this form an angle member 42.1 is welded to the upper face of the plate 42 so that the apex of the member 42.1 lies directly beneath the aperture 40. This arrangement not only enhances lateral distribution but also inhibits packing of the chemical substance on the plate 42. This can be a problem when the chemical substance is damp.

Referring now to Figures 9 and 10, the agricultural apparatus illustrated has certain parts in common with the apparatus of the earlier Figures. Consequently, where applicable, like reference numerals have been employed.

The apparatus comprises a tank 174 which has a filler opening and screen at 176 and a breather plug at 178. A drain plug is shown at 180 and a horizontal shaft 182 having agitators 184 thereon is mounted in bearings 186 carried by opposed walls of the tank 174.

An hydraulic motor 188 drives the shaft 182 by way of a flexible coupling 190, a drive pulley 192, a belt 194, and a further drive pulley 196. The output shaft of the motor 188 also drives a pump 198 the suction inlet of which is connected by a pipe 200 to the bottom of the tank 174. The delivery pipe 202 of the pump 198 slopes downwardly to a bend 204 which is in turn connected to a pipe 48.1.

Most of the remaining parts illustrated in Figures 9 and 10 are equivalent to the corresponding parts in the earlier Figures and, where applicable, have been designated with the same reference numeral with the addition of suffix '.1'. In Figure 9 the wing mouldboard 32.1 of the subsoil plough 30.1 is far more steeply angled than is illustrated in the earlier Figures. A wing which is steeply angled in this way is also suitable for use in the earlier embodiments as it increases the size of the cavity which is formed below the wing mouldboard. A bracing member 206 is provided on each side of the shank 26.1 to support the wing mouldboards.

Below the wing mouldboards 32.1 there are two spray bars 208 each of which has a series of spray apertures in the underside thereof. Each bar 208 extends outwardly and slightly rearwardly from the socket 44.1 and has its outer end attached by a bracket 210 to the underside of the wing mouldboards 32.1 thereby to minimise the possibility of the spray bars being broken away.

The agitators 184 are mainly used where the substance being applied is not soluble and must therefore be held in suspension to ensure application in the requisite manner.

1. Agricultural apparatus which includes a shank having means for mounting it on a tractive vehicle and having an earthworking implement at the lower end thereof, there being a pipe extending downwardly adjacent the shank with the lower end of the pipe opening below the earthworking implement, characterized in that the earthworking implement (30) comprises a wing mouldboard (32) on each side of the shank (26), the wing mouldboards (32) sloping upwardly in the rearward direction and said pipe (48, 144) having its lower end opening into the zone below said wing mouldboards (32) and its upper end connected to means (16, 84, 146) for forcing a chemical substance down the pipe and into said zone, there being soil breakers (36) at the rear of the implement, the soil breakers extending rearwardly from the trailing edge of the remainder of the implement and protruding above said trailing edge.

2. Agricultural apparatus according to Claim 1, characterized in that said wing mouldboards (32) extend rearwardly of the shank and there is a plate (33) joining said mouldboards behind the shank, there being an aperture (40) in said plate, said pipe (48, 144) leading down to said aperture and there being below said aperture (40) a distributor plate (42) which material flowing down said pipe strikes and is distributed laterally.

3.      Agricultural apparatus according to Claim 2, characterized in that said distributor plate (42) includes an element (42.1) in the form of an upwardly convergent vee, the apex of which lies below said aperture (40).

4.      Agricultural apparatus according to Claim 1, 2 or 3, and comprising a hopper for the chemical substance, characterized in that the outlet from the hopper (10) communicates with the interior of the housing of a blower (16) and the outlet of the blower communicates with said pipe (48).

5.      Agricultural apparatus according to any one of Claims 1 to 3 and comprising a hopper for the chemical substance which hopper is arranged so that the chemical substance flows under gravity into the upper end of said pipe, characterized in that there is a blower (146) for forcing air into said pipe (144) at an intermediate point thereof in such manner that it draws downwardly the substance which is in the part of the pipe above the air entry point.

6.      Agricultural apparatus according to Claim 4 or 5, characterized by an agitator (88, 132) at the outlet of the hopper for preventing packing and bridging of the substance.

7.      Agricultural apparatus according to Claim 6, characterized in that said agitator (88,132) is driven by a fluid motor (70, 160).

8.      Agricultural apparatus according to Claim 4, 5 or 6, characterized in that said blower (84, 146) is driven by a fluid motor (70, 148).

9.      Agricultural apparatus according to Claim 4, 5, 6 or 7, characterized by mechanically operable means (94,96,98,100) for enabling the rate of flow of chemical substance through the hopper outlet to be varied.

10.      Agricultural apparatus according to Claim 1, characterized in that said means is a pump (198), there being a tank (174) for receiving a liquid and the suction inlet pipe (200) of the pump being connected to said tank, said pipe communicating with a spray bar (208) which is in said zone.

FIG. 1

FIG. 2

FIG. 3

FIG. 5

FIG. 4

FIG. 6

FIG. 8

F I G.  7

FIG.9

FIG.10

0016499

European Patent
Office

**EUROPEAN SEARCH REPORT**

Application number

EP 80 20 0232.9

| DOCUMENTS CONSIDERED TO BE RELEVANT | | | CLASSIFICATION OF THE APPLICATION (Int Cl) |
|---|---|---|---|
| Category | Citation of document with indication, where appropriate, of relevant passages | Relevant to claim | |
| | DE - C - 335 464 (P. PLATH) <br> * page 2, lines 36 to 57; fig. 4 to 6 * | 1-3 | A 01 C 23/02 |
| | DE - A1 - 2 807 639 (NATIONAL RESEARCH DEVELOPMENT CORP.) <br> * page 16, line 30 to page 17, line 15 * | 1,5, 9 | |
| | US - A - 3 908 567 (L.M. BRANNAN) <br> * columns 3 to 4; fig. 1, 2 * | 1,6, 7,9 | **TECHNICAL FIELDS SEARCHED (Int.Cl)** <br><br> A 01 B 17/00 <br> A 01 C 23/02 |
| | DE - U - 1 791 034 (K. STOCKBURGER) <br> * claims 1, 6; fig. 1, 2 * | 1 | A 01 M 17/00 |
| | US - A - 4 079 680 (D.A. DAVIS) <br> * column 3, lines 46 to 59; fig. 2, 3 * | 1 | |
| | US - A - 3 581 685 (B.R. TAYLOR) <br> * fig. 1 to 6 * | 1 | **CATEGORY OF CITED DOCUMENTS** <br><br> X: particularly relevant <br> A: technological background <br> O: non-written disclosure <br> P: intermediate document <br> T: theory or principle underlying the invention |
| A | FR - A - 1 460 802 (F.J.A. CONTE) <br> * fig. 1 * <br><br> .../... | | E: conflicting application <br> D: document cited in the application <br> L: citation for other reasons |

| | | | &: member of the same patent family, corresponding document |
|---|---|---|---|
| X | The present search report has been drawn up for all claims | | |
| Place of search <br> Berlin | Date of completion of the search <br> 20-06-1980 | Examiner <br> SCHOFER | |

EPO Form 1503.1 06.78

0016499

European Patent
Office

**EUROPEAN SEARCH REPORT**

Application number

EP 80 20 0232.9
- page 2 -

| | **DOCUMENTS CONSIDERED TO BE RELEVANT** | | CLASSIFICATION OF THE APPLICATION (Int. Cl.) |
|---|---|---|---|
| Category | Citation of document with indication, where appropriate, of relevant passages | Relevant to claim | |
| A | <u>DE - A1 - 2 701 695</u> (ZIJLSTRA EN BOLHUIS B.V.) <br><br> * entire document * <br><br> ---- | | |

TECHNICAL FIELDS
SEARCHED (Int. Cl.)

EPO Form 1503.2 06.78